# EUROPÄISCHE PATENTSCHRIFT

(11) **EP 1 541 447 B1**
(45) Veröffentlichungstag und Bekanntmachung des Hinweises auf die Patenterteilung: **07.02.2007**
(21) Anmeldenummer: 04027045.6
(22) Anmeldetag: 13.11.2004
(51) Int. Cl.: B62D 21/11, B62D 21/15

(54) **Längsträger für eine Achskonstruktion eines Kraftfahrzeugs**
Longitudinal for an axle construction of a motor vehicle
Longeron pour un ensemble essieu d'un véhicule automobile

(30) Priorität: 10.12.2003 DE 10357628
(43) Veröffentlichungstag der Anmeldung: 15.06.2005
(73) Patentinhaber: Benteler Automobiltechnik GmbH, 33104 Paderborn (DE)
(72) Erfinder: Roxel, Andreas, 59329 Wadersloh (DE); Schneider, Klaus, 34431 Marsberg (DE)
(74) Vertreter: Ksoll, Peter

(56) Entgegenhaltungen:
- EP-A- 1 331 161
- DE-A1- 2 254 299
- DE-A1- 19 934 666
- GB-A- 2 332 883
- US-A- 4 674 770
- US-B1- 6 286 895

## Beschreibung

Die Erfindung betrifft einen Längsträger für eine Achskonstruktion eines Kraftfahrzeugs, insbesondere eines Personenwagens, gemäß den Merkmalen im Oberbegriff des Anspruchs 1.

Um Belastungen von Fahrzeuginsassen bei einem Frontalcrash zu minimieren, wird angestrebt, die Aufprallenergie über die im vorderen Wagenbereich befindliche Achskonstruktion definiert in Verformungsenergie umzuwandeln, da diese einen relevanten Einfluss auf das Gesamtfahrzeug ausübt. Zu diesem Zweck ist es bekannt, aus Längsgurten gebildete hohle Längsträger einer Achskonstruktion dünnwandig zu gestalten, aus einem höchstfesten Werkstoff zu fertigen und Sollknickbereiche zu definieren. Die geringe Wanddicke hat jedoch zur Folge, dass der zuerst einknickende Längsgurt nach der Knickentstehung ohne hohe Energieumwandlung weiter einknickt und dadurch keine zeitliche Streckung der Energieumwandlung erreicht wird. Man hat zwar durch eingebaute Versteifungsbleche oder durch Sicken in dem zuerst einknickenden Längsgurt versucht, höhere Widerstandskräfte zu erzielen. Diese Maßnahme führte aber nur zu einer höheren Verformungskraft beim Einknicken. Eine zeitliche Streckung der Energieumwandlung konnte hiermit jedoch nicht erzielt werden.

Aus der gattungsbildenden DE 22 54 299 A1 geht eine Rahmeneinheit zum Absorbieren von Aufprallenergie hervor. Die Rahmenkonstruktion weist Längsträger auf, die über den wesentlichen Teil ihrer Länge hohl ausgebildet sind und im Längsverlauf einen Sollknickbereich aufweisen. Der Längsträger ist aus zwei Profilen zusammengesetzt, die miteinander gefügt sind. An beiden Profilen sind Deformationselemente angeordnet, welche zu dem jeweils anderen Profil distanziert sind. Die Deformationselemente weisen einen gewölbten Boden und Längswände auf.

Der Erfindung liegt - ausgehend vom Stand der Technik - die Aufgabe zugrunde, einen Längsträger für eine Achskonstruktion zu schaffen, der bei einem Frontalcrash eines Kraftfahrzeugs nach der Knickentstehung eine zeitliche Streckung der Umwandlung der Aufprallenergie in Verformungsenergie gewährleistet.

Diese Aufgabe wird mit den im kennzeichnenden Teil des Anspruchs 1 angegebenen Merkmalen gelöst.

Unabhängig von der räumlichen Lage eines Längsträgers in seiner Zuordnung zu einer Achskonstruktion ist jetzt erfindungsgemäß dafür Sorge getragen, dass mindestens zwei speziell ausgebildete Längsgurte vorgesehen und miteinander gefügt, insbesondere verschweißt, sind. Einem dieser Längsgurte wird die Funktion eines sich im Sollknickbereich zuerst verformenden Primärgurts überantwortet. Der diesem gegenüberliegende Längsgurt wirkt als sich zeitlich später verformender Sekundärgurt. Außerdem ist in den Sollknickbereich mindestens ein zum Primärgurt distanziertes, aber mit dem Sekundärgurt gefügtes, insbesondere verschweißtes, Deformationselement integriert.

Das Deformationselement ist als zum Sekundärgurt hin offene kastenartige Crashbox mit zwei Längswänden und zwei Querwänden ausgebildet. Dabei sind sowohl der Boden des Deformationselements zum Steg des U-förmigen Primärgurts als auch die Längswände des Deformationselements zu den Schenkeln des Primärgurts im Abstand angeordnet.

Bei einem Frontalcrash ist durch diese Ausbildung gewährleistet, dass der Primärgurt zunächst ohne Veränderung des Kraft-Weg-Verlaufs einknicken kann. Der nachfolgende Kontakt mit dem Deformationselement verhindert aber das widerstandslose Weiterknicken des Primärgurts. Aufgrund des weiterhin hoch gehaltenen Kraftniveaus wird eine erhöhte Energiemenge umgewandelt. Die Knickkraft sinkt erst später mit sich gleichzeitig verformendem Primärgurt, Deformationselement und Sekundärgurt.

Die Belastungen der Fahrzeuginsassen werden auf eine zulässige Größenordnung gesenkt.

Der Primärgurt ist im Querschnitt U-förmig ausgebildet und überwölbt den streifenartig gestalteten Sekundärgurt. Auf diese Weise wird bei einem Frontalcrash erreicht, dass im Sollknickbereich zunächst der Primärgurt einknickt und sich anschließend der Steg des Primärgurts auf den Boden des Deformationselements legt, wobei danach die Längswände des Deformationselements in den freien Raum zum Primärgurt hin ausweichen können und sich letzten Endes an den Schenkeln abstützen. Jetzt knickt auch das Deformationselement komplett ein.

Es ist nach der Erfindung von Vorteil, wenn gemäß Anspruch 2 das Deformationselement nur bereichsweise über die freien Kanten seiner Wände mit dem Sekundärgurt gefügt ist. Das Verformungsverhalten kann hierdurch zusätzlich gesteuert werden.

Auch die Merkmale des Anspruchs 3, wonach die Eckbereiche zwischen den Längswänden und den Querwänden über die gesamte Höhe des Deformationselements ausgespart sind, tragen mit dazu bei, das Verformungsverhalten im Sollknickbereich bei einem Frontalcrash optimal ablaufen zu lassen.

Von besonderem Vorteil ist es gemäß Anspruch 4, wenn der Sollknickbereich bogenförmig ausgebildet ist und das Deformationselement sich auf der konkaven Innenseite des Sekundärgurts erstreckt. Hierbei kann der bogenförmige Verlauf des Sollknickbereichs in allen räumlichen Ebene liegen. Der Längsträger hat in diesem Fall bevorzugt eine insgesamt S-förmige Konfiguration zwischen seinen endseitigen Anbindungsbereichen.

Bei einem bogenförmigen Verlauf des Sollknickbereichs ist es nach Anspruch 5 dann zweckmäßig, dass eine Querwand des Deformationselements kürzer als die andere Querwand ausgebildet ist. Die kürzere Querwand wird dem Längenabschnitt des Längsträgers zugeordnet, der sich zwischen dem Deformationselement und seiner in Fahrtrichtung vorderen Anbindung an die Achskonstruktion erstreckt. Dadurch wird kein zusätzlicher Verformungswiderstand zwischen dem Deformationselement und dem Sekundärgurt aufgebaut, wenn sich bei der Verformung des Längsträgers der Sekundärgurt und das Deformationselement durch Knickung aufeinander zu bewegen.

In diesem Zusammenhang ist es ferner zweckmäßig, wenn entsprechend den Merkmalen des Anspruchs 6 die neben der kürzeren Querwand liegenden Bereiche der Längswände des Deformationselements durch Wellungen mit den restlichen Bereichen der Längswände verbunden ist. Das Deformationselement kann sich hierdurch gezielt verformen.

Zur Unterstützung dieser Ausgestaltung sehen die Merkmale des Anspruchs 7 vor, dass die neben der kürzeren Querwand liegenden Bereiche der Längswände des Deformationselements und die längere Querwand über ihre Längskanten mit dem Sekundärgurt gefügt sind. Auf diese Weise wird gewissermaßen nur eine Dreipunktverbindung zwischen dem Deformationselement und dem Sekundärgurt erzielt.

Zur gezielten Versteifung des Deformationselements sind nach Anspruch 8 in seinem Boden und/oder in seinen Wänden Einprägungen vorgesehen.

Die Einprägungen in den Wänden des Deformationselements erstrecken sich gemäß Anspruch 9 annähernd parallel zu den Stirnkanten der Wände. Sie besitzen eine längliche muldenartige Kontur.

Die Einprägungen im Boden des Deformationselements sind gemäß Anspruch 10 bevorzugt muldenartig gestaltet.

Eine weitere Versteifung des Deformationselements im Bereich der längeren Querwand wird mit den Merkmalen des Anspruchs 11 erzielt. Danach sind in den gerundet ausgebildeten Übergang vom Boden des Deformationselements auf die längere Querwand Mulden eingeprägt.

Eine Materialreduzierung kann dadurch erreicht werden, dass entsprechend Anspruch 12 mindestens für den Primärgurt ein höchstfester Werkstoff der Qualität Rₑ > 400 MPa mit einer Wanddicke unter 2 mm zum Einsatz gelangt.

Schließlich kann eine Beeinflussung des Verformungsverhaltens des Längsträgers nach Anspruch 13 noch dadurch erzielt werden, dass in den Sekundärgurt von der dem Primärgurt zugewandten Seite her Längssicken eingeprägt sind.

Die Einprägungen in den Wänden und im Boden des Deformationselements bzw. die Sicken in dem Sekundärgurt sind bevorzugt gerundet. Es werden keine scharfen Kanten gebildet.

Die Erfindung ist nachfolgend anhand eines in den Zeichnungen dargestellten Ausführungsbeispiels näher erläutert. Es zeigen:
- Figur 1: im Schema in der Draufsicht eine Achskonstruktion für ein Kraftfahrzeug;
- Figur 2: einen vertikalen Querschnitt durch die Darstellung der Figur 1 entlang der Linie II-II in Richtung der Pfeile IIa gesehen;
- Figur 3: in schematischer Perspektive einen Längsträger der Achskonstruktion der Figuren 1 und 2;
- Figur 4: in schematischer Perspektive ein Deformationselement für den Längsträger der Figur 3;
- Figur 5: das Deformationselement der Figur 4 in schematischer Perspektive von der Unterseite her gesehen und
- Figuren 6 bis 8: in einer Finite-Element-Darstellung den Ausschnitt VI der Figur 2 in drei Betriebssituationen eines Längsträgers.

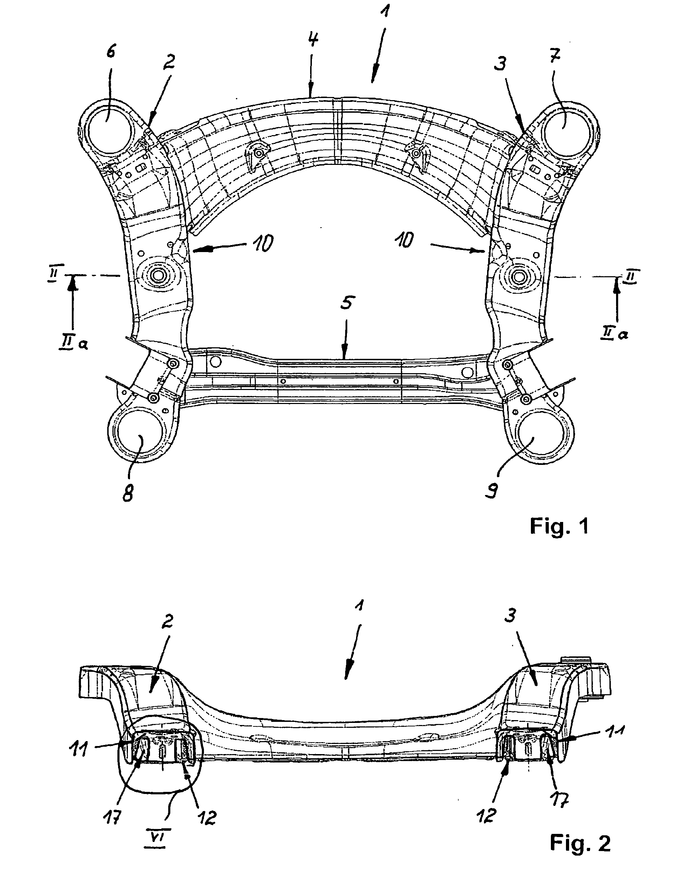

In den Figuren 1 und 2 ist mit 1 eine Achskonstruktion für einen Personenwagen bezeichnet, die in dessen Vorderachsbereich eingesetzt wird. Diese Achskonstruktion 1 setzt sich generell aus zwei Längsträgern 2, 3 sowie zwei Querträgern 4, 5 zusammen. Die Längsträger 2, 3 werden über die Anbindungsbereiche 6-9 in nicht näher veranschaulichter Weise mit den Längsholmen der Fahrzeugkarosserie verbunden.

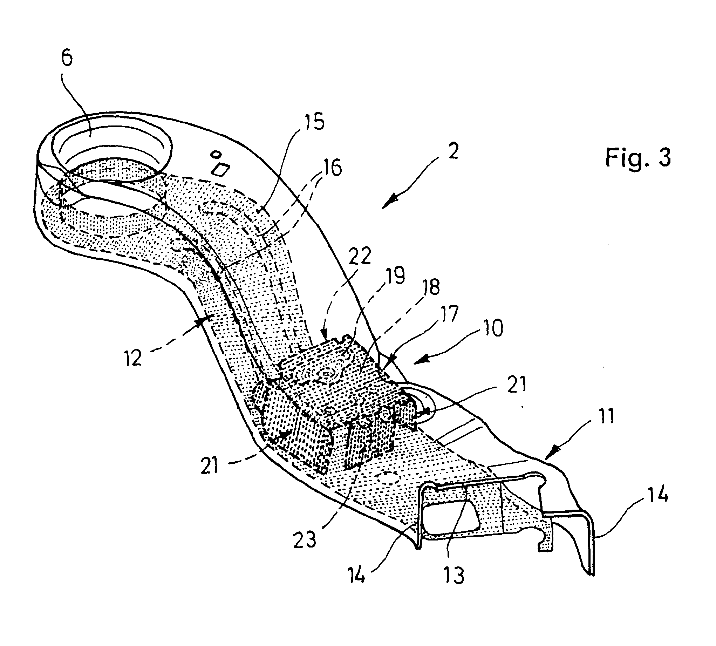

Jeder Längsträger 2, 3 - in Bezug genommen wird nachfolgend nur der Längsträger 2 - ist über den wesentlichen Teil seiner Länge hohl ausgebildet und weist einen viereckigen Querschnitt auf (Figuren 2, 3 und 6). In seinem S-förmigen Längenverlauf besitzt der Längsträger 2 einen Sollknickbereich 10, der beim Ausführungsbeispiel bogenförmig ausgebildet ist (Figur 3).

Der viereckige Querschnitt des Längsträgers 2 wird durch zwei miteinander gefügte, insbesondere verschweißte, Längsgurte 11, 12 gebildet, von denen einer die Funktion eines sich im Sollknickbereich 10 zuerst verformenden Primärgurts 11 wahrnimmt und der andere als sich zeitlich später verformender Sekundärgurt 12 wirkt (Figuren 2, 3 und 6).

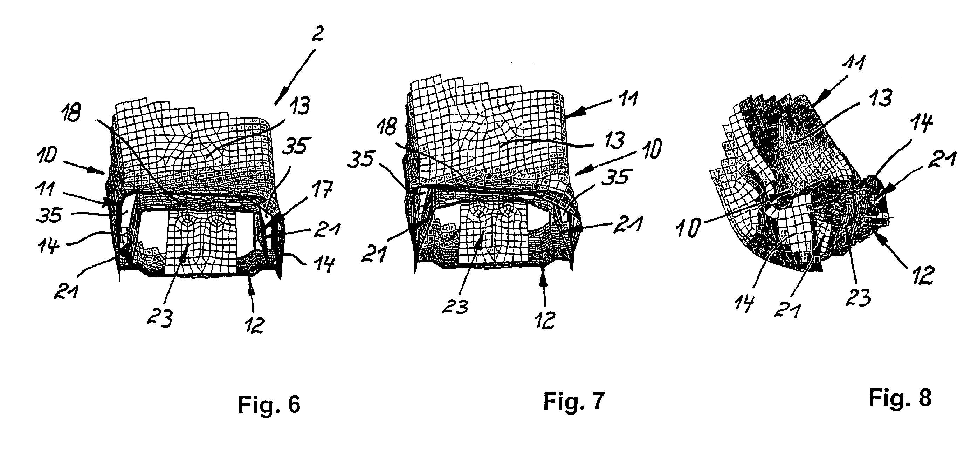

Der Primärgurt 11 ist im Querschnitt U-förmig ausgebildet und setzt sich aus einem Steg 13 sowie zwei Schenkeln 14 zusammen. Der Sekundärgurt 12 ist streifenartig gestaltet (grau konturiert) und wird von dem Primärgurt 11 in Längsrichtung überwölbt. In den Sekundärgurt 12 sind von der dem Primärgurt 11 zugewandten Seite 15 her Längssicken 16 eingeprägt. Die Längssicken 16 sind kantenfrei gemuldet (Figuren 3 und 6).

In den Sollknickbereich 10 ist ein Deformationselement 17 in Form einer kastenartigen Crashbox integriert (Figuren 3 bis 6). Wie bei gemeinsamer Betrachtung der Figuren 2 bis 6 zu erkennen ist, setzt sich das Deformationselement 17 aus einem Boden 18 mit muldenartigen Einprägungen 19, 20 sowie zwei Längswänden 21 und zwei Querwänden 22, 23 zusammen. Sowohl die Längswände 21 als auch die Querwände 22, 23 sind über gerundet ausgebildete Übergänge 24 mit dem Boden 18 verbunden. Die Eckbereiche 25 zwischen den Längswänden 21 und den Querwänden 22, 23 sind über die gesamte Höhe des Deformationselements 17 ausgespart. In den Längswänden 21 sind sich parallel zu den Stirnkanten 26 der Wände 21, 22, 23 erstreckende längliche Einprägungen 27 in Form von nach außen gedrückten Mulden vorgesehen.

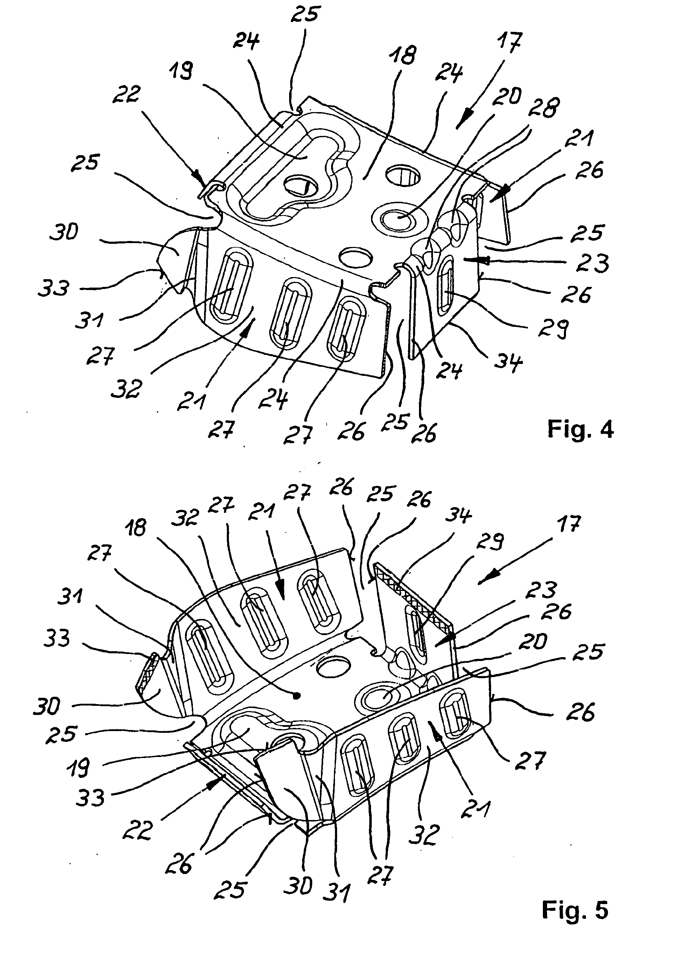

Von den beiden Querwänden 22, 23 ist die dem Anbindungsbereich 6 des Längsträgers 2 zugewandte Querwand 22 kürzer als die abgewandte Querwand 23 ausgebildet (Figuren 4 und 5). Am Übergang 24 von dem Boden 18 auf die längere Querwand 23 sind Mulden 28 eingeprägt. Ferner ist zu sehen, dass in diese längere Querwand 23 eine sich parallel zu den Stirnkanten 26 der Querwand 23 erstreckende Mulde 29 von innen nach außen eingeprägt ist. Die neben der kürzeren Querwand 22 liegenden Bereiche 30 der Längswände 21 sind durch Wellungen 31 mit den restlichen Bereichen 32 verbunden.

Das Deformationselement 17 ist lediglich über die freien Längskanten 33, 34 der neben der kürzeren Querwand 22 liegenden Bereiche 30 sowie der längeren Querwand 23 mit dem Sekundärgurt 12 gefügt, insbesondere verschweißt.

Bei einem Frontalcrash des Kraftfahrzeugs knickt aufgrund der Ausgestaltung des Längsträgers 2 zunächst der Primärgurt 11 ein (Figur 7). Der Verformungswiderstand sinkt zunächst nach der Knickbildung. Der Steg 13 des Primärgurts 11 legt sich im weiteren Verlauf entsprechend der Darstellung der Figur 7 auf den Boden 18 des Deformationselements 17. Hierdurch erhöht sich der Verformungswiderstand und die Knickkraft steigt. Die Längswände 21 des Deformationselements 17 können in die freien Räume 35 zwischen dem Deformationselement 17 und dem Primärgurt 11 ausweichen und sich letztlich dort abstützen. Der Verformungswiderstand bleibt hoch (Figur 8).

### Bezugszeichenaufstellung

- 1 -: Achskonstruktion
- 2 -: Längsträger v. 1
- 3 -: Längsträger v. 1
- 4 -: Querträger v. 1
- 5 -: Querträger v. 1
- 6 -: Anbindungsbereich v. 2
- 7 -: Anbindungsbereich v. 3
- 8 -: Anbindungsbereich v. 2
- 9 -: Anbindungsbereich v. 3
- 10 -: Sollknickbereich v. 2
- 11 -: Primärgurt
- 12 -: Sekundärgurt
- 13 -: Steg v. 11
- 14 -: Schenkel v. 11
- 15 -: Seite v. 12
- 16 -: Längssicken in 15
- 17 -: Deformationselement
- 18 -: Boden v. 17
- 19 -: Einprägung in 18
- 20 -: Einprägung in 18
- 21 -: Längswände v. 17
- 22 -: Querwand v. 17
- 23 -: Querwand v. 17
- 24 -: Übergänge zw. 18 u. 21 bzw. 22, 23
- 25 -: Eckbereiche v. 17
- 26 -: Stirnkanten v. 21, 22, 23
- 27 -: Einprägungen in 21
- 28 -: Mulden in 24
- 29 -: Mulde in 23
- 30 -: Bereiche v. 21
- 31 -: Wellungen in 21
- 32 -: Bereiche v. 21
- 33 -: Längskanten v. 30
- 34 -: Längskanten v. 23
- 35 -: freie Räume zw. 17 u. 11

## Patentansprüche

1. Längsträger für eine Achskonstruktion (1) eines Kraftfahrzeugs, welcher über den wesentlichen Teil seiner Länge hohl ausgebildet ist und im Längsverlauf mindestens einen Sollknickbereich (10) aufweist, wobei sein Querschnitt durch mindestens zwei miteinander gefügte Längsgurte (11,12), einem Primärgurt (11) und einem Sekundärgurt (12), gebildet ist, wobei in den Sollknickbereich (10) mindestens ein zu dem Primärgurt (11) distanziertes und mit dem Sekundärgurt (12) gefügtes Deformationselement (17) integriert ist, welches einen Boden (18) und Längswände (21) aufweist und hinsichtlich seines Bodens (18) sowie seiner Längswände (21) mit Abstand zu einem Steg (13) bzw. zu Schenkeln (14) des Primärgurts (11) angeordnet ist, **dadurch gekennzeichnet, dass** das Deformationselement (17) als zum Sekundärgurt (12) hin offene, kastenartige Crashbox mit zwei Längswänden (21) und zwei Querwänden (22,23) ausgebildet ist und der Primärgurt (11) im Querschnitt U-förmig ausgebildet ist und den streifenartig gestalteten Sekundärgurt (12) überwölbt.

2. Längsträger nach Anspruch 1, **dadurch gekennzeichnet, dass** das Deformationselement (17) mindestens bereichsweise über die freien Kanten (33,34) seiner Wände (21,23) mit dem Sekundärgurt (12) gefügt ist.

3. Längsträger nach Anspruch 1 oder 2, **dadurch gekennzeichnet, dass** die Eckbereiche (25) zwischen den Längswänden (21) und den Querwänden (22,23) über die gesamte Höhe des Deformationselements (17) ausgespart sind.

4. Längsträger nach einem der Ansprüche 1 bis 3, d a durch **gekennzeichnet**, dass der Sollknickbereich (10) bogenförmig ausgebildet ist und das Deformationselement (10) sich auf der konkaven Innenseite (15) des Sekundärgurts (12) erstreckt.

5. Längsträger nach einem der Ansprüche 1 bis 4, **dadurch gekennzeichnet, dass** eine Querwand (22) des Deformationselements (17) kürzer als die andere Querwand (23) ausgebildet ist.

6. Längsträger nach Anspruch 4 oder 5, **dadurch gekennzeichnet, dass** die neben der kürzeren Querwand (22) liegenden Bereiche (30) der Längswände (21) durch Wellungen (31) mit den restlichen Bereichen (32) verbunden sind.

7. Längsträger nach Anspruch 6, **dadurch gekennzeichnet, dass** die neben der kürzeren Querwand (22) liegenden Bereiche (30) der Längswände (21) und die längere Querwand (23) über ihre Längskanten (33,34) mit dem Sekundärgurt (12) gefügt sind.

8. Längsträger nach einem der Ansprüche 1 bis 7, **dadurch gekennzeichnet, dass** im Boden (18) und/oder in den Wänden (21,22,23) des Deformationselements (17) Einprägungen (19,20,27,29) vorgesehen sind.

9. Längsträger nach Anspruch 8, **dadurch gekennzeichnet, dass** die Einprägungen (27) in den Wänden (21) des Deformationselements (17) sich annähernd parallel zu den Stirnkanten (26) der Wände (21) erstrecken.

10. Längsträger nach Anspruch 8 oder 9, **dadurch gekennzeichnet, dass** die Einprägungen (19,20) im Boden (18) des Deformationselements (17) muldenartig ausgebildet sind.

11. Längsträger nach einem der Ansprüche 1 bis 10, **dadurch gekennzeichnet, dass** in den gerundet ausgebildeten Übergang (24) vom Boden (18) des Deformationselements (17) auf die längere Querwand (23) Mulden (28) eingeprägt sind.

12. Längsträger nach einem der Ansprüche 1 bis 11, **dadurch gekennzeichnet, dass** mindestens für den Primärgurt (11) ein höchstfester Werkstoff der Qualität Re>400 MPa mit einer Wanddicke unter 2 mm zum Einsatz gelangt.

13. Längsträger nach einem der Ansprüche 1 bis 12, **dadurch gekennzeichnet, dass** in den Sekundärgurt (12) von der dem Primärgurt (11) zugewandten Seite (15) her Längssicken (16) eingeprägt sind.

## Claims

1. Longitudinal member for an axle construction (1) of a motor vehicle, which is of hollow design over the substantial part of its length and, in longitudinal profile, has at least one predetermined buckling region (10), its cross section being formed by at least two longitudinal booms (11, 12) joined to each other, a primary boom (11) and a secondary boom (12), at least one deformation element (17) being integrated into the predetermined buckling region (10), which deformation element is distanced from the primary boom (11) and is joined to the secondary boom (12), has a base (18) and longitudinal walls (21) and, with regard to its base (18) and its longitudinal walls (21), is arranged at a distance from a web (13) and from limbs (14) of the primary boom (11), **characterized in that** the deformation element (17) is designed as a box-like crash box which is open towards the secondary boom (12) and has two longitudinal walls (21) and two transverse walls (22, 23), and the primary boom (11) is of U-shape design in cross section and curves over the secondary boom (12) which is of strip-like configuration.

2. Longitudinal member according to Claim 1, **characterized in that** the deformation element (17) is joined at least in some regions via the free edges (33, 34) of its walls (21, 23) to the secondary boom (12).

3. Longitudinal member according to Claim 1 or 2, **characterized in that** the corner regions (25) between the longitudinal walls (21) and the transverse walls (22, 23) are recessed over the entire height of the deformation element (17).

4. Longitudinal member according to one of Claims 1 to 3, **characterized in that** the predetermined buckling region (10) is of curved design and the deformation element (10) extends on the concave inner side (15) of the secondary boom (12).

5. Longitudinal member according to one of Claims 1 to 4, **characterized in that** a transverse wall (22) of the deformation element (17) is designed to be shorter than the other transverse wall (23).

6. Longitudinal member according to Claim 4 or 5, **characterized in that** those regions (30) of the longitudinal walls (21) which are situated next to the shorter transverse wall (22) are connected to the remaining regions (32) by means of corrugations (31).

7. Longitudinal member according to Claim 6, **characterized in that** those regions (30) of the longitudinal walls (21) which are situated next to the shorter transverse wall (22) and the longer transverse wall (23) are joined to the secondary boom (12) via their longitudinal edges (33, 34).

8. Longitudinal member according to one of Claims 1 to 7, **characterized in that** impressions (19, 20, 27, 29) are provided in the base (18) and/or in the walls (21, 22, 23) of the deformation element (17).

9. Longitudinal member according to Claim 8, **characterized in that** the impressions (27) in the walls (21) of the deformation element (17) extend approximately parallel to the end edges (26) of the walls (21).

10. Longitudinal member according to Claim 8 or 9, **characterized in that** the impressions (19, 20) in the base (18) of the deformation element (17) are of trough-like design.

11. Longitudinal member according to one of Claims 1 to 10, **characterized in that** troughs (28) are impressed into the transition (24), which is of rounded design, from the base (18) of the deformation element (17) onto the longer transverse wall (23).

12. Longitudinal member according to one of Claims 1 to 11, **characterized in that** a super-high-strength material of Re > 400 MPa quality with a wall thickness below 2 mm is used at least for the primary boom (11).

13. Longitudinal member according to one of Claims 1 to 12, **characterized in that** longitudinal beads (16) are impressed into the secondary boom (12) from the side (15) facing the primary boom (11).

## Revendications

1. Longeron pour un ensemble essieu (1) d'un véhicule automobile, lequel est configuré creux sur une partie essentielle de sa longueur et qui comporte dans son extension longitudinale au moins une zone destinée au coudage (10), sa section étant formée par au moins deux semelles longitudinales (11, 12) assemblées ensemble, une semelle primaire (11) et une semelle secondaire (12), dans la zone destinée au coudage (10) est intégré au moins un élément de déformation (17) à distance de la semelle primaire (11) et assemblé à la semelle secondaire (12), lequel élément de déformation comporte un fond (18) et des parois longitudinales (21), et est disposé du point de vue de son fond (18) ainsi que de ses parois longitudinales (21) à distance d'une nervure (13), respectivement de branches (14) de la semelle primaire (11), **caractérisé en ce que** l'élément de déformation (17) est configuré comme boîte de collision en forme de caisson, ouverte vers la semelle secondaire (12), avec deux parois longitudinales (21) et deux parois transversales (22, 23), et **en ce que** la semelle primaire (11) est configurée en forme de U dans sa section et enjambe la semelle secondaire (12) configurée en forme de bande.

2. Longeron selon la revendication 1, **caractérisé en ce que** l'élément de déformation (17) est assemblé au moins par zones par l'intermédiaire des arêtes libres (33, 34) de ses parois (21, 23) à la semelle secondaire.

3. Longeron selon la revendication 1 ou 2, **caractérisé en ce que** les zones de coin (25) entre les parois longitudinales (21) et les parois transversales (22, 23) sont évidées sur l'ensemble de la hauteur de l'élément de déformation (17).

4. Longeron selon l'une quelconque des revendications 1 à 3, **caractérisé en ce que** la zone destinée au coudage (10) est configurée en forme d'arc et **en ce que** l'élément de déformation (10) s'étend sur la face intérieure concave (15) de la semelle secondaire (12).

5. Longeron selon l'une quelconque des revendications 1 à 4, **caractérisé en ce qu'**une paroi transversale (22) de l'élément de déformation (17) est configurée plus courte que l'autre paroi transversale (23).

6. Longeron selon la revendication 4 ou 5, **caractérisé en ce que** les zones (30) des parois longitudinales (21) se trouvant à côté de la paroi transversale (22) plus courte sont reliées aux zones restantes (32) par des ondulations (31).

7. Longeron selon la revendication 6, **caractérisé en ce que** les zones (30) des parois longitudinales (21) se trouvant à côté de la paroi transversale (22) plus courte et la paroi transversale (23) plus longue sont assemblées par leurs arêtes longitudinales (33, 34) à la semelle secondaire (12).

8. Longeron selon l'une quelconque des revendications 1 à 7, **caractérisé en ce que** des estampages (19, 20, 27, 29) sont prévus dans le fond (18) et/ou dans les parois (21, 22, 23) de l'élément de déformation (17).

9. Longeron selon la revendication 8, **caractérisé en ce que** les estampages (27) dans les parois (21) de l'élément de déformation (17) s'étendent à peu près parallèlement aux arêtes frontales (26) des parois (21).

10. Longeron selon la revendication 8 ou 9, **caractérisé en ce que** les estampages (19, 20) dans le fond (18) de l'élément de déformation (17) sont configurés à la façon de cuvettes.

11. Longeron selon l'une quelconque des revendications 1 à 10, **caractérisé en ce que** des cuvettes (28) sont estampées dans la transition (24), configurée arrondie, du fond (18) de l'élément de déformation (17) sur la paroi transversale (23) plus longue.

12. Longeron selon l'une quelconque des revendications 1 à 11, **caractérisé en ce qu'**au moins pour la semelle primaire (11), un matériau à très haute résistance de la qualité Re>400 MPa avec une épaisseur de paroi de moins de 2 mm est utilisé.

13. Longeron selon l'une quelconque des revendications 1 à 12, **caractérisé en ce que** des moulures longitudinales (16) sont estampées dans la semelle secondaire (12), depuis le côté (15) tourné vers la semelle primaire (11).
